# EUROPEAN PATENT SPECIFICATION

(11) **EP 4 324 892 B1**
(45) Date of publication and mention of the grant of the patent: **16.04.2025**
(21) Application number: 22190765.2
(22) Date of filing: 17.08.2022
(51) Int. Cl.: C09J 4/06, C09J 143/04, C09J 151/00, C09K 3/10, C08F 265/06

(54) **REMOVABLE ADHESIVE AND SEALANT COMPOSITION**
ENTFERNBARE KLEBSTOFF- UND DICHTUNGSZUSAMMENSETZUNG
COMPOSITION D'ADHÉSIF ET DE SCELLEMENT AMOVIBLE

(43) Date of publication of application: 21.02.2024
(73) Proprietor: Henkel AG & Co. KGaA, 40589 Düsseldorf (DE)
(72) Inventor: Maier, Maximilian, 40223 Düsseldorf (DE); Kereszturi, Agnes, 40221 Düsseldorf (DE); Huener, Anne, 40217 Düsseldorf (DE)

(56) References cited:
- EP-B1- 2 663 586
- WO-A1-2020/123454

## Description

The invention relates to curable compositions comprising at least one poly(meth)acrylate ester polymer containing at least one reactive silyl group, at least one tertiary aminosilane, at least one fumed silica, and at least one curing catalyst, a process for preparing removable adhesion, the use of said curable composition, and adhesive, sealant, and/or coating materials comprising said curable composition. The curable compositions of the invention are easily removable without damaging substrates after they are cured and show adequate mechanical properties.

For adhesives, user-friendly handling properties, for example an adequate initial grab in case of construction adhesives and final adhesion properties on a wide range of substrates are required. These properties can be achieved by using, for example, formulations based on silane-modified polymer. These formulations usually deliver good long-term adhesion properties. However, they can hardly be removed without damaging substrates or leaving substantial residues on the surfaces. Due to the unfavorable removability properties, users often favor conventional methods of fixation, i.e., screws & dowels or nails. Additionally, as sustainability aspects gain traction, debonding of once bonded substrates gets more important, as it potentially allows for reuse and recycling.

WO 2012/095826 A2 discloses removable adhesive and sealant compositions based on polyether containing silane groups and there are adhesive products already on the market, which claim removability. However, these products show unfavorable material properties, which are usually relevant to the category, like low initial tack and mediocre adhesion. Also, depending on the surface, removal of residual adhesive can be tedious.

Accordingly, there was a need for adhesives or sealants which show adequate mechanical properties to a range of different substrates, as well as features of being mechanically debondable/removable without specialized tools and allowing for clean removal of adhesive or sealant residues.

The present invention achieves said object by providing curable compositions based on (meth)acrylate ester polymer containing at least one reactive silyl group. It has been found that the combination of the (meth)acrylate ester polymer containing at least one reactive silyl group and special additives disclosed herein provides for balanced adhesion and cohesion which allow easy and clean removal of the cured product without damaging the substrates while showing good mechanical properties.

In a first aspect, the invention relates to a curable composition comprising
(A) at least one (meth)acrylate ester polymer containing at least one reactive silyl group of the general formula (I)

   -Si(R^{a})ₖ(R^{b})₃₋ₖ (I),

   wherein
   each R^{a} is, independently of one another, selected from hydrocarbon residues containing 1 to 20 carbon atoms;
   each R^{b} is, independently of one another, selected from a hydroxyl group or hydrolysable groups; and,
   k is 0, 1, or 2;
(B) at least one tertiary aminosilane;
(C) at least one fumed silica; and,
(D) at least one curing catalyst.

In another aspect, the invention relates to a process for preparing a removable adhesion of at least two substrates by applying a curable composition of the invention between the substrates.

The invention further relates to the use of a curable composition of the invention as an adhesive, sealant, or coating material, preferably a removable adhesive, sealant, and/or coating material composition.

The invention also relates to an adhesive, sealant, and/or coating material comprising the curable composition of the invention.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In the context of the present invention, "curable" predominantly relates to the property of the reactive silyl group of general formula (I) and/or (II) to condensate.

The term "removable" or "removability" herein refers to the feature of the cured composition of the present invention that it is manually debondable from the surface where the composition has been applied without using specialized tools.

Provided reference is made to molecular weights of oligomers or polymers in the present application, the quantities, unless otherwise stated, refer to the weight average, i.e., the M_{w} value, and not to the number average molecular weight. The molecular weight is determined by gel permeation chromatography (GPC) with tetrahydrofuran (THF) as the eluent according to DIN 55672-1:2007-08, preferably at 35°C, unless otherwise stated. Molecular weights of monomeric compounds are calculated based on the respective molecular formula and the known molecular weights of the individual atoms.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"About", as used herein in relation to numerical values means the referenced value ±10%, preferably ±5%.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Functional groups that can replace the hydrogen atoms are selected particularly from =O, =S, -OH, -SH, -NH₂, -N(C₁₋₁₀ alkyl)₂, such as -N(CH₃)₂, -NO₂, -CN, -F, -Cl, -Br, -I, -COOH, - CONH₂, -OCN, -NCO, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. Heteroalkyl groups in which 1 or more carbon atoms are replaced by heteroatoms, particularly selected from O, S, N, and Si, are obtained by the replacement of one or more carbon atoms by heteroatoms, preferably the carbon being replaced not being the one linking the group to the rest of the molecule. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc.

"Alkoxy" refers to an alkyl group, as defined herein, that is linked via an -O- to the rest of the molecule. The respective term thus includes groups, such as methoxy and ethoxy.

"Alkenyl," as used herein, refers to an alkyl group, as defined herein, which consists of at least two carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be substituted or unsubstituted. If they are substituted, the substituents are as defined above for alkyl. "Alkenyloxy" refers to an alkenyl group, as defined herein, that is linked via an -O-to the rest of the molecule. The respective term thus includes enoxy groups, such as vinyloxy (H₂C=CH-O-).

"Alkynyl," as used herein, refers to an alkyl group, as defined herein, which consists of at least two carbon atoms and at least one carbon-carbon triple bond, e.g., ethynyl (acetylene), propynyl, butynyl, or petynyl and structural isomers thereof as described above. Alkynyl groups can be substituted or unsubstituted. If they are substituted, the substituents are as defined above for alkyl. "Alkylnyloxy" refers to an alkynyl group, as defined herein, that is linked via an -O- to the rest of the molecule.

A "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -OH, -SH, -NH₂, -NO₂, -CN, -F, -Cl, -Br, -I, -COOH, - CONH₂, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur. "Cycloalkyloxy" refers to a cycloalkyl group, as defined herein, that is linked via an -O- to the rest of the molecule.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl. "Aryloxy" refers to an aryl group, as defined herein, that is linked via an -O- to the rest of the molecule.

A "heteroaryl" group, as used herein, refers to a monocyclic or polycyclic (i.e., rings that share an adjacent ring atom pair) aromatic ring, having particularly 5 to 10 ring atoms, where one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl. "(Hetero)aryl", as used herein, refers to both aryl and heteroaryl groups as defined herein. "Heteroaryloxy" refers to a heteroaryl group, as defined herein, that is linked via an -O- to the rest of the molecule.

A "heteroalicyclic group" or a "heterocycloalkyl group," as used herein, refers to a monocyclic or fused ring having 5 to 10 ring atoms, which contains one, two, or three heteroatoms, selected from N, O, and S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl. "Heteroalicyclic" refers to a heteroalicyclic group, as defined herein, that is linked via an -O- to the rest of the molecule.

Combinations of the afore-mentioned groups include, for example, alkylaryl or arylalkyl groups and the like. In such combinations each of the respective group may be substituted or unsubstituted, as defined above.

### Component (A)

The curable composition comprises at least one (meth)acrylate ester polymer (A) containing at least one reactive silyl group of the general formula (I)

-Si(R^{a})ₖ(R^{b})₃₋ₖ (I),

wherein
each R^{a} is, independently of one another, selected from hydrocarbon residues containing 1 to 20 carbon atoms;
each R^{b} is, independently of one another, selected from a hydroxyl group or hydrolysable groups; and,
k is 0, 1, or 2.

The reactive silyl group of the general formula (I) can be a lateral group within the polymer chain of the polymer (A) or a terminal group of the polymer (A). In preferred embodiments, the reactive silyl group of the general formula (I) is a terminal group of the polymer (A).

In preferred embodiments, the polymer (A) has 1.7-5.0, more preferably at least two reactive silyl groups of the general formula (I). In this case, the polymer (A) can have at least one lateral silyl group of the general formula (I) and at least one terminal silyl group of the general formula (I); or, at least two lateral silyl groups of the general formula (I); or, at least two terminal silyl groups of the general formula (I).

In particularly preferred embodiments, the polymer (A) has at least two terminal reactive silyl groups of the general formula (I).

In preferred embodiments, the (meth)acrylate ester polymer (A) of the present invention is a polymer having an alkyl acrylate ester monomer unit and/or alkyl methacrylate ester monomer unit with a C₁₋₂₀ alkyl group.

In preferred embodiments, k is 0 or 1.

R^{a} and R^{b} are substituents directly bonded to the Si atom.

Each R^{a} in the general formula (I) is, independently of one another, selected from hydrocarbon residues containing 1 to 20 carbon atoms, preferably selected from C₁ to C₈ alkyl groups, more preferably is a methyl or an ethyl.

Each R^{b} in the general formula (I) is, independently of one another, selected from a hydroxyl group or hydrolysable groups, preferably selected from the group consisting of a hydrogen atom, a halogen atom, alkoxy groups, acyloxy groups, ketoximate groups, amino groups, amide groups, acid amide groups, aminooxy groups, mercapto groups, and alkenyloxy groups, more preferably selected from alkoxy or acyloxy groups, most preferably selected from alkoxy groups. In particularly preferred embodiments, each R^{b} is, independently of one another, selected from C₁ to C₈ alkoxy groups, in particular a methoxy, ethoxy, i-propyloxy or i-butyloxy group. When k is 0 or 1, combinations of more than one group are also possible.

Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups. They are therefore suitable in particular for use as sealants. In addition, they split off even less alcohol during curing and are therefore of particular interest when the quantity of alcohol released is to be reduced.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Methoxy and ethoxy groups as comparatively small hydrolysable groups with low steric bulk are very reactive and thus permit a rapid cure, even with low use of catalyst. They are therefore of particular interest for systems in which rapid curing is desirable, such as for example in adhesives with which high initial adhesion is required.

Interesting configuration possibilities are also opened up by combinations of the two groups. If, for example, methoxy is selected for one of the R^{b} and ethoxy for the other R^{b} within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolysable groups, which by nature exhibit lower reactivity. This is of particular interest if delayed curing is also to be achieved by means of the configuration of the alkoxy groups.

In particularly preferable embodiments, the reactive silyl group, i.e., -Si(R^{a})ₖ(R^{b})₃₋ₖ, is selected from alkyldialkoxysilyl or trialkoxysilyl groups, preferably selected from methyldimethoxysilyl, ethyldiethoxysilyl, trimethoxysilyl, triethoxysilyl, triisopropoxysilyl, methoxydiethoxysilyl, or ethoxydimethoxysilyl groups, more preferably selected from a trimethoxysilyl or triethoxysilyl group, most preferably is a trimethoxysilyl group.

The (meth)acrylate ester polymer can be prepared from a mixture of (meth)acrylate monomers. Examples of (meth)acrylate monomer include methyl (meth)acrylate, ethyl (meth)acrylate, n-propyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, 2-ethylhexyl (meth)acrylate, n-heptyl (meth)acrylate, n-octyl (meth)acrylate, isooctyl (meth)acrylate, n-nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, behenyl (meth)acrylate, and biphenyl (meth)acrylate.

In preferred embodiments, the mixture of (meth)acrylate monomers comprises i) at least one first (meth)acrylate monomer having a structure of CH₂=CR¹COOR², where R¹ is H or CH₃; and R² is a C₄₋₂₄, preferably C₄₋₉, linear, branched or cyclic alkyl chain, in particular n- or iso-butyl (meth)acrylate or 2-ethylhexyl (meth)acrylate, or a combination thereof; and ii) at least one second (meth)acrylate monomer having a structure of CH₂=CR¹COOR³, where R¹ is H or CH₃; R³ is C₁₋₂ alkyl chain, in particular methyl (meth)acrylate, or a combination thereof. The weight ratio of the first monomer to the second monomer is preferably 60:40 to 10:90 for good balance of strength and adhesiveness. In preferred embodiments, the (meth)acrylate ester polymer contains at least 50% by weight, and more preferably at least 70% by weight, of the (meth)acrylate monomer unit.

The (meth)acrylate ester polymer may further include a monomer copolymerizable with the above-described monomer(s). Examples thereof include: (meth)acrylic acids, monomers having an amide group (e.g., (meth)acrylamide or N-methylol (meth)acrylamide), monomers having an epoxy group (e.g., glycidyl (meth)acrylate), and monomers having an amino group (e.g., diethylaminoethyl (meth)acrylate or aminoethyl vinyl ether), polyoxyethylene (meth)acrylate, and monomer units derived from acrylonitrile, styrene, α-methylstyrene, alkyl vinyl ether, vinyl chloride, vinyl acetate, vinyl propionate, or methylene.

In preferred embodiments, the (meth)acrylate ester polymer having the reactive silyl group of the general formula (I) as defined herein can be prepared as described in EP 2684690 A1 and EP2289997 A1.

The (meth)acrylate ester polymer may be prepared by solution, emulsion, or bulk polymerization procedures using well-known polymerization techniques, such as free radical, anionic, and cationic techniques. The reaction can be generally performed by mixing the monomers, a radical initiator, a chain transfer agent, and a solvent, then reacting them at 50°C to 150°C.

Examples of the radical initiator include azo and peroxide radical initiator, preferably azobisisobutylonitrile or benzoyl peroxide.

Examples of the chain transfer agent include mercaptans such as n-dodecyl mercaptan, t-dodecyl mercaptan, and lauryl mercaptan, and halogen-containing compounds.

Examples of the solvent include alkanes, such as hexane, heptane, octane, and isooctane; aromatic hydrocarbons, such as benzene, toluene, and xylene; esters, such as ethyl, propyl, butyl and heptyl acetate; halogenated hydrocarbons, such as chlorobenzene; alcohols, such as methanol, ethanol, isopropanol, ethylene glycol, and ethylene glycol; ethers, such as THF, diethyl ether and dibutyl ether; or mixtures thereof. Non-reactive solvents such as ethers, hydrocarbons, and esters are preferably used.

The reactive silyl group of the general formula (I) may be introduced into the (meth)acrylate ester polymer (A) by various methods. For example, the polymer can be prepared by the methods described in EP 2289997 A1, i.e., by (i) a method in which a compound having a polymerizable unsaturated bond and a reactive silyl group is allowed to copolymerize with the monomers; (ii) a method in which the monomers are allowed to copolymerize in the presence of a mercaptan having a reactive silyl group as a chain transfer agent; and a method as a combination of the methods (i) and (ii), in which a compound having a polymerizable unsaturated bond and a reactive silyl group is allowed to copolymerize with the monomers in the presence of a mercaptan having a reactive silyl group as a chain transfer agent.

In preferred embodiments, the resultant (meth)acrylate ester polymer has a weight average molecular weight (Mw) of 500 to 100,000 g/mol, more preferably 1,000 to 30,000 g/mol, in particular 1,500 to 10,000 g/mol, determined by GPC relative to polystyrene standard.

Preferred examples of commercially available products comprising (meth)acrylate ester polymers are MS Silyl^{™} MA Polymers MA850, MA451, MA 480, MA490 from Kaneka Corporation.

### Component (B)

The curable composition comprises at least one tertiary aminosilane (B).

The term "tertiary aminosilane", as used herein, refers to an aminosilane wherein the nitrogen atom of the amino group is covalently linked to three non-hydrogen residues.

The cured product of the composition can show a balanced adhesion and cohesion by comprising at least one tertiary aminosilane.

In preferred embodiments, the tertiary aminosilane (B) is selected from the group consisting of 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3- trimethoxysilyl)propylamine, bis(3-triethoxysilyl)propylamine, and mixtures thereof, particularly preferably selected from the group consisting of 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane and 4-amino-3,3-dimetylbuthyltriethoxysilane.

In preferred embodiments, the curable composition comprises at least one tertiary aminosilane (B) in an amount of from 0.1 to 5.0 % by weight, more preferably from 0.1 to 2.0 % by weight, in particular from 0.1 to 1.0 % by weight, based on the total weight of the composition.

### Component (C)

The curable composition comprises at least one fumed silica (C).

In preferred embodiments, the curable composition comprises a mixture of at least one hydrophilic fumed silica and at least one hydrophobic fumed silica. In particular, at least one hydrophilic fumed silica with a BET surface area of 10 to 500 m²/g and/or at least one hydrophobic fumed silica with a BET surface area of 10 to 500 m²/g can be used.

The use of such a silica contributes to reinforcing the hardened preparation and a high cohesion. By means of this reinforcement, for example the initial strengths, tensile shear strengths and the adhesion of the adhesives, sealants or coating compositions in which the composition according to the invention is used are improved. Preferably, uncoated silicas with a BET surface area of less than 100 m²/g, more preferably less than 65 m²/g, and/or coated silicas with a BET surface area of 100 to 400, more preferably 100 to 300, in particular 150 to 300 and most particularly preferably 200 to 300 m²/g, can be used.

In preferred embodiments, the curable composition comprises at least one fumed silica (C) in an amount of from 10 to 30 % by weight, more preferably from 15 to 25 % by weight, based on the total weight of the composition. If a mixture of fumed silicas is used, the amounts refer to the total amount of fumed silicas in the composition.

### Component (D)

The curable composition comprises at least one curing catalyst (D).

The catalysts that can be used are all known compounds that can catalyze hydrolytic cleavage of the hydrolysable groups of the silane groupings, as well as subsequent condensation of the Si-OH group to yield siloxane groupings (crosslinking reaction and adhesion promotion function).

Examples thereof are titanates such as tetrabutyl titanate and tetrapropyl titanate, tin carboxylates such as dibutyltin dilaurate (DBTL), dibutyltin diacetate, dibutyltin diethylhexanoate, dibutyltin dioctoate, dibutyltin dimethylmaleate, dibutyltin diethylmaleate, dibutyltin dibutylmaleate, dibutyltin diiosooctylmaleate, dibutyltin ditridecylmaleate, dibutyltin dibenzylmaleate, dibutyltin maleate, dibutyltin diacetate, tin octaoate, dioctyltin distearate, dioctyltin dilaurate (DOTL), dioctyltin diethylmaleate, dioctyltin diisooctylmaleate, dioctyltin diacetate, dioctyltin diketanoate, and tin naphthenoate; tin alkoxides such as dibutyltin dimethoxide, dibutyltin diphenoxide, and dibutyltin diisoproxide; tin oxides such as dibutyltin oxide and dioctyltin oxide; reaction products between dibutyltin oxides and phthalic acid esters, dibutyltin bisacetylacetonate; organoaluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; lead octanoate; amine compounds or salts thereof with carboxylic acids, such as butylamine, octylamine, laurylamine, dibutylamines, monoethanolamines, diethanolamines, triethanolamine, diethylenetriamine, triethylenetetramine, oleylamines, cyclohexylamine, benzylamine, diethylaminopropylamine, xylylenediamine, triethylenediamine, guanidine, diphenylguanidine, 2,4,6- tris(dimethylaminomethyl)phenol, morpholine, N-methylmorpholine, 2-ethyl-4-methylimidazole, und 1,8-diazabicyclo-(5,4,0)-undecene-7 (DBU), a low-molecular-weight polyamide resin obtained from an excess of a polyamine and a polybasic acid, adducts of a polyamine in excess with an epoxy, silane adhesion promoters having amino groups, such as 3-aminopropyltrimethoxysilane and N-(β-aminoethyl)aminopropylmethyldimethoxysilane.

The catalyst (D), preferably mixtures of several catalysts, can be used in a quantity from 0.01 to 5 wt%, more preferably 0.03 to 3 wt%, based on the entire weight of the curable composition.

### Component (E)

The curable composition may further comprise at least one polymer (E) containing at least one reactive silyl group of the general formula (II)

-Xₒ-R-Si(R^{c})ₘ(R^{d})₃₋ₘ (II),

wherein
the polymer backbone is selected from polyethers, polyesters, polyurethanes, poly-α-olefins, or copolymers of at least two of said polymers;
X is a divalent linking group containing at least one heteroatom;
R is selected from divalent hydrocarbon residues containing 1 to 12 carbon atoms;
each R^{c} is, independently of one another, selected from hydrocarbon residues containing 1 to 20 carbon atoms and each R^{d} is, independently of one another, selected from a hydroxyl group or hydrolysable groups, wherein R^{c} and R^{d} are substituents directly bound with the Si atom or the two of the substituents R^{a} and R^{b} form a ring together with the Si atom to which they are bound;
m is 0, 1, or 2; and,
o is 0 or 1.

In this context, the divalent linking group (bonding group) X comprising at least one heteroatom is understood to be a divalent chemical group which links the polymer backbone of the polymer (E) with the residue R of the general formula (II).

The index "o" corresponds to 0 (zero) or 1, i.e., the linking group X links the polymer backbone with the residue R (o = 1) or the polymer backbone is bound or linked directly with the residue R (o = 0).

In various embodiments, when o is 1, the divalent linking group X in the general formula (II) is selected from -O-, -S-, -N(R")-, -R"'-O-, a substituted or unsubstituted amide, carbamate, urethane, urea, imino, carboxylate, carbamoyl, amidino, carbonate, sulfonate or sulfinate group, wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms. The term "substituted" in relation to these groups means that a hydrogen atom present in these groups may be replaced by a non-hydrogen moiety, such as alkyl or aryl groups, preferably C₁₋₁₂ alkyl or C₆₋₁₄ aryl groups.

When o is 1, in preferred embodiments, the linking group X is urethane or urea group, more preferably urethane group. Urethane group can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea group can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. Urethane and urea groups advantageously increase the strength of the polymer chains and of the overall crosslinked polymer.

In preferred embodiments, the linking group X is selected from the group consisting of -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, -NR"-, and -R"'-O-, wherein R" and R‴ are as defined above. In more preferred embodiments, the linking group X is selected from -O-C(=O)-N(R")-, -N(R")-C(=O)O- , -N(R")-C(=O)-N(R")-, -S-, - O-, -N(R")-, or -R"'-O-, wherein R" and R‴ are as defined above. In particularly preferred embodiments, the linking group X is selected from -O-C(=O)-N(R")-, -N(R")-C(=O)-N(R")-, -O-, or - R"'-O-, wherein R" and R‴ are as defined above, more preferably -O-C(=O)-NH- or -NH-C(=O)-NH-, most preferably -O-C(=O)-NH-.

In other preferred embodiments, o is 0 and the reactive silyl group of the general formula (II) is directly bound to polymer backbone via the residue R.

The residue R is a divalent hydrocarbon residue having 1 to 12 carbon atoms. The hydrocarbon residue can be a linear, branched or cyclic alkylene residue and can be substituted or unsubstituted. The hydrocarbon residue can be saturated or unsaturated. In preferred embodiments, R is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R is a methylene, ethylene or n-propylene, in particular a methylene or n-propylene.

R^{c} and R^{d} are substituents directly bound with the Si atom or the two of the substituents R^{c} and R^{d} can form a ring together with the Si atom to which they are bound. In preferred embodiments, R^{c} and R^{d} are the substituents directly bound with the Si atom.

Each R^{c} in the general formula (II) is, independently of one another, selected from hydrocarbon residues containing 1 to 20 carbon atoms, preferably selected from C₁ to C₁₀ alkyl groups, C₆ to C₁₀ aryl groups, or C₇ to C₁₀ aralkyl groups, more preferably selected from C₁ to C₈ alkyl groups, most preferably is a methyl or an ethyl group.

Each R^{d} in the general formula (II) is, independently of one another, selected from a hydroxyl group or hydrolysable groups, preferably selected from the group consisting of a hydrogen atom, a halogen atom, alkoxy groups, acyloxy groups, ketoximate groups, amino groups, amide groups, acid amide groups, aminooxy groups, mercapto groups, and alkenyloxy groups, more preferably selected from alkoxy or acyloxy groups, most preferably selected from C₁ to C₈ alkoxy groups or C₁ to C₈ acyloxy groups.

In particularly preferred embodiments, each R^{d} is, independently of one another, selected from C₁ to C₈ alkoxy groups, in particular selected from a methoxy, ethoxy, i-propyloxy or i-butyloxy group. When m is 0 or 1, combinations of more than one group are also possible.

In preferred embodiments, m is 0 or 1.

In particularly preferable embodiments, the silyl group -Si(R^{c})ₘ(R^{d})₃₋ₘ is selected from alkyldialkoxysilyl or trialkoxysilyl groups, preferably selected from a methyldimethoxysilyl, ethyldiethoxysilyl, trimethoxysilyl, or triethoxysilyl group, most preferably selected from a methyldimethoxysilyl or trimethoxysilyl group.

The reactive silyl group of the general formula (II) can be a lateral group within the polymer chain of the polymer (E) or a terminal group of the polymer (E). In preferred embodiments, the silyl group of the general formula (II) is a terminal group of the polymer.

In preferred embodiments, the polymer (E) has at least two reactive silyl groups of the general formula (II). In this case, the polymer (E) can have at least one lateral silyl group of the general formula (II) and at least one terminal silyl group of the general formula (II); or, at least two lateral silyl groups of the general formula (II); or, at least two terminal silyl groups of the general formula (II).

In particularly preferred embodiments, the polymer (E) has at least two terminal silyl groups of the general formula (II). Then, each polymer chain comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

The polymer backbone of the polymer (E) is selected from polyethers, polyesters, polyurethanes, or poly-α-olefins, or copolymers of at least two of said polymers. Preferably, the polymer backbone is selected from polyethers or polyurethanes.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof. Polymers having lateral ether groups, such as cellulose ethers, starch ethers and vinyl ether polymers, as well as polyacetals such as polyoxymethylene (POM) are not included in the polyethers.

A "polyurethane" is understood to be a polymer which has at least two urethane groups -NH-CO-O-in the main chain.

In particularly preferred embodiments, the polymer (E) has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight Mₙ of the polyether on which the polymer is based is for preference 500 to 500,000 g/mol (daltons), more preferably 500 to 60,000, particularly preferably 1,000 to 60,000 and in particular 2,000 to 40,000 g/mol, most preferably 8,000 to 35,000 g/mol.

Particularly advantageous viscoelastic properties can be achieved if polyethers having a narrow molecular weight distribution, and thus low polydispersity, are used. These can be produced, for example, by so-called double metal cyanide catalysis (DMC catalysis). Polyethers produced in this way are distinguished by a particularly narrow molecular weight distribution, by a high average molecular weight and by a very low number of double bonds at the ends of the polymer chains.

In a special embodiment of the present invention, the maximum polydispersity M_{w}/Mₙ of the polyether on which the polymer is based is therefore 2, particularly preferably 1.5 and most particularly preferably 1.3.

The ratio M_{w}/Mₙ (polydispersity) indicates the width of the molecular weight distribution and thus of the different degrees of polymerization of the individual chains in polydisperse polymers. For many polymers and polycondensates, a polydispersity value of about 2 applies. Strict monodispersity would exist at a value of 1. A low polydispersity of, for example, less than 1.5 indicates a comparatively narrow molecular weight distribution, and thus the specific expression of properties associated with molecular weight, such as e.g., viscosity. In preferred embodiments, the polyether on which the polymer (E) is based has a polydispersity (M_{w}/Mₙ) of less than 1.3.

The polymer (E) can be obtained by various ways, which are known in the art, e.g., (i) by reacting at least one polyol and at least one isocyanatosilane; or (ii) by reacting at least one polyol with a stoichiometric excess of at least one polyisocyanate, and reacting the obtained NCO-terminated polyurethane prepolymer with at least one aminosilane, such as 3-aminopropyltrimethoxysilane.

A "polyol" is understood to be a compound which contains at least two OH groups, irrespective or whether the compound contains other functional groups. However, a polyol used in accordance with the present invention preferably contains only OH groups as functional groups or, if other functional groups are present, none of these other functional groups is reactive at least to isocyanates under the conditions prevailing during the reaction of the polyol(s) and isocyanatosilane(s) or polyisocyante(s).

The polyols suitable for preparing said silane-terminated polymer (E) are preferably polyether polyol. The above descriptions about the molecular weight and polydispersity of the polyether apply to the polyether polyol. The polyether polyol is preferably a polyalkylene oxide, particularly preferably polyethylene oxide and/or polypropylene oxide. In preferred embodiments, a polyether or a mixture of two polyethers are used.

Besides the polyethers, the polyol mixture may contain other polyols. For example, it may contain polyester polyols with a molecular weight of about 200 to about 30,000.

The isocyanatosilane used in the above reaction is understood to have the general formula of OCN-R-Si(R^{c})ₘ(R^{d})₃₋ₘ, wherein R, R^{c}, R^{d}, and m are as defined for the general formula (II).

A "polyisocyanate" is understood to be a compound which has at least two isocyanate groups -NCO.

This compound does not have to be a polymer, and instead is frequently a low molecular compound. The polyisocyanates suitable for preparing the polyurethane according to the invention include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H₁₂-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates. The polyisocyanate is preferably IPDI, TDI or MDI.

Other polyisocyanates suitable for use in accordance with the invention are isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

Alternatively, the polymer (E) can be obtained by the method as described in EP 2684690 A1 and EP2289997 A1.

With respect to the ratio between the (meth)acrylate ester polymer (A) and the polymer (E) in the curable composition of the present invention, the weight ratio (A)/(E) is preferably in the range of 20/80 to 90/10, more preferably from 25/75 to 60/40 for good compatibility and viscosity, and good strength of a cured product to be provided. In some preferred embodiments, the weight ratio is preferably 40/60 to 50/50.

The total proportion of the (meth)acrylate ester polymer (A) containing at least one reactive silyl group of the general formula (I) and the optional polymer (E) containing at least one reactive silyl group of the general formula (II) in the composition according to the invention is preferably from about 40 to about 55 % by weight, more preferably from about 45 to about 50 % by weight.

When the content of the polymers (A) and (E) is lower than 40 % by weight, elasticity and tear propagation strength of the cured adhesive may deteriorate (cohesive failure). Furthermore, adhesion of the cured adhesive deteriorates, which, on the one hand, leads to an improved removability (adhesive failure). On the other hand, with deteriorating adhesion, there is a risk of not reaching the minimum accepted adhesion that is required. The decrease of the content of the polymers (A) and (E) below 40 % by weight also leads to a worse processability during production and a highly viscous paste, impacting the extrudability during application.

When the content of the polymers (A) and (E) is higher than 55% by weight, tear propagation strength may deteriorate (cohesive failure). Furthermore, removability deteriorates and the curing of the paste, especially when two non-porous surfaces are glued together, takes more time. When increasing the content of polymers (A) and (E) above 55 % by weight, effects like stringing of the paste appear. Furthermore, the viscosity of the paste decreases, improving the extrudability but at the same time deteriorating the initial adhesion of substrates that are applied in vertical application.

The curable composition can further comprise, in addition to the aforementioned components (A) to (E), at least one auxiliary substance, such as plasticizers, adhesion promoters, stabilizers, fillers, reactive diluents, drying agents, flame retardants, dispersion agents, thickeners, rheological adjuvants, color pigments or color pastes, and so on.

A "plasticizer" is understood as a substance that decreases the viscosity of the compositions and thus facilitates processability. Hydrophilic plasticizers serve to improve moisture uptake and thus to improve reactivity at low temperatures. Suitable as plasticizers are, for example, adipic acid esters, azelaic acid esters, benzoic acid esters, butyric acid esters, acetic acid esters; esters of higher fatty acids having approximately 8 to approximately 44 carbon atoms, esters of OH-group-carrying or epoxidized fatty acids, fatty acid esters and fats, glycolic acid esters, phosphoric acid esters, phthalic acid esters of linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

In particularly preferred embodiments, the plasticizer comprises an ester of a polyol and an aliphatic monocarboxylic acid having 3 to 20 carbon atoms, preferably selected from triethylene glycol bis-2-ethylhexanoate, tetraethylene glycol di-n-heptanoate, triethylene glycol di-2-ethyl butyrate, triethylene glycol di-n-heptanoate or tetraethylene glycol di-2-ethylhexanoate. In most preferred embodiments, triethylene glycol bis-2-ethylhexanoate is used as plasticizer.

In preferred embodiments, the curable composition may comprise at least one plasticizer in an amount of 1 to 40% by weight, preferably in an amount of 15 to 35% by weight, particularly preferably in an amount of 20 to 30% by weight, based in each case on the total weight of the composition. If a mixture of plasticizers is used, the amounts refer to the total amount of plasticizers in the composition.

The curable composition can further comprise at least one additional adhesion promoter different from the component (B) up to about 20% by weight. Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily *α*- or *β*-pinene, dipentene, or limonene. These monomers are generally polymerized cationically with initiation using Friedel-Crafts catalysts. The terpene resins also include, for example, copolymers of terpenes and other monomers, for example, styrene, α-methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are primary or secondary aminosilanes, γ-mercaptopropyltrimethoxysilane, γ-mercaptopropyltriethoxysilane, γ-mercaptopropylmethyldimethoxysilane, γ-glycidoxypropyltrimethoxysilane, y-glycidoxypropyltriethoxysilane, γ-glycidoxcypropylmethyldimethoxysilane, β-carboxyethyltriethoxysilane, β-carboxyethylphenylbis(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In some embodiments, the curable composition is substantially free from primary aminosilane. In the context of the present invention, "substantially free from primary aminosilane" is understood to mean that the curable composition does not contain said component or does not contain it as an intentionally added component. The amount of the primary aminosilane in the curable composition is therefore preferably less than 0.1% by weight, more preferably less than 0.05% by weight, in particular less than 0.01% by weight or below the detection limit.

The curable composition can further comprise at least one dispersing agent, preferably up to 3 % by weight. For example, it is commercially obtainable under the trade name DISPERPLAST-P, DISPERPLAST-1142, DISPERPLAST^{®} 1148, DISPERPLAST-I, DISPERBYK-2157, DISPERBYK-2155, or BYK-9076 by the company BYK-Chemie GmbH.

The curable composition can further comprise at least one thickener (thixotropic agent), preferably up to 5 % by weight. Examples of the thickener include hydrogenated castor oils, micronized amid waxes. For example, it is commercially obtainable under the trade name Polluwax HCO3299 by the company Castor Products, EfkA^{®} RM 1900 or Efka^{®} RM 1920 by the company BASF, ALBERDINGK^{®} Albothix 82-32 by the company Alberdingk Boley, LUVOTIX R by the company Lehmann&Voss&Co, DISPARLON^{®} 6500 by the company Kusomoto Chemicals, or CRAYVALLAC^{®} SLT, CRAYVALLAC^{®} SLX, CRAYVALLAC^{®} SL, or CRAYVALLAC^{®} SLW by the company Arkema.

The curable composition can further comprise at least one stabilizer, selected from antioxidants, UV stabilizers, and drying agents. All conventional antioxidants may be used as antioxidants. They are preferably present up to about 7% by weight, particularly up to about 5% by weight.

The composition herein can comprise UV stabilizers, which are preferably used up to about 2% by weight, more preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation
Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O‴-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions can generally contain up to 6% by weight of drying agent.

The composition described herein can further contain at least one additional filler. Suitable here are, for example, chalk, lime powder, precipitated silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

Suitable further as fillers are hollow spheres having a mineral shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity from 3000 to 15,000, preferably 40,000 to 80,000 mPas, or even 50,000 to 60,000 mPas.

The fillers are preferably used in an amount of 1 to 70% by weight, particularly preferably 2 to 40% by weight. Of course, mixtures of a number of fillers can also be used. The amounts refer to the total amount of filler in the composition including the fumed silica (component (C)).

With regard to the preferred representatives of the individual components and the preferably used quantities thereof, the statements made above in the description of the respective components apply.

The preparation of the curable composition according to the invention can take place by simple mixing of the components (A) to (D) and optionally the other ingredients described herein. This can take place in suitable dispersing units, e.g., a dissolver mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

A removable adhesion of at least two substrates can be prepared by applying the curable composition of the invention between the substrates. In preferred embodiments, the substrate is selected from solid materials, making removable possible without damaging its surface. Preferred materials include ceramic tiles, glass or high-pressure laminate. Other substrates, on which removable might be possible with minimal damage are semisolid surfaces, like untreated wood, varnished/glazed wood, concrete, non-ferrous metals, plastics (except PE, PP, PTFE, PS).

The balanced adhesion and cohesion of the cured product of the curable composition of the invention allow easy and clean removal of the cured product without damaging the substrates.

The curable composition of the invention is used as an adhesive, sealant, and/or coating material, preferably a removable adhesive, sealant, and/or coating material. More preferably, the curable composition of the invention is used as a construction adhesive.

The following examples serve to explain the invention, but the invention is not limited thereto.

### Examples

Described amounts of components according to Tables 1 and 2 were filled into a 600ml speedmixer plastic can with a plastic screw cap. The ingredients according to Tables 1 and 2 were added in several steps and were mixed for 1min at 2000rpm each time (an) ingredient(s) were/was added. For the last step, two holes were poked into the screw cap to mix the ingredients under vacuum (200mbar) for 1min at 2000rpm. For mixing, a speedmixer type DAC 600.2 VAC-P by Hauschild Engineering was used. The paste was filled into a cartridge directly after production and sealed with a piston.

**Table 1**

| **Amounts in wt. %** | **E1** | **C1** | **C2** |
|---|---|---|---|
| Silyl^{™} MA490 | 50.00 | 50.25 | 50.00 |
| Triethylene glycol bis (2-ethylhexanoate) | 25.00 | 25.13 | 25.00 |
| Antioxidant (Irganox 1135) | 0.30 | 0.30 | 0.30 |
| HDK^{®} H20 | 12.00 | 12.06 | 12.00 |
| Aerosil^{®} Ox50 | 10.00 | 10.05 | 10.00 |
| Vinyltrimethoxysilane | 2.00 | 2.01 | 2.00 |
| 3-(N,N-Dimethylaminopropyl)trimethoxysilane | 0.50 | 0 | 0 |
| 3-Aminopropyltrimethoxysilane | 0 | 0 | 0.50 |
| Dioctyltin dicetanoate | 0.20 | 0.20 | 0.20 |

| | | | |
|---|---|---|---|
| Silyl^{™} MA490: Acrylic polymer having reactive silyl groups from Kaneka Corporation HDK^{®} H20: Hydrophobic fumed silica from Wacker Chemie AG Aerosil^{®} Ox50: hydrophilic fumed silica from Evonik Industries AG | | | |

**Table 2: Conventional construction adhesive**

| **Amounts in wt. %** | **C3** |
|---|---|
| Silane-modified polymer* | 50.26 |
| Hexamoll^{®} DINCH | 33.31 |
| HDK^{®} H20 | 12.51 |
| Vinyltrimethoxysilane | 2.26 |
| 3-Aminopropyltrimethoxysilane | 1.47 |
| Dioctyltin dilaurate | 0.19 |

### Hexamoll^{®} DINCH: plasticizer from BASF SE

*Silane-modified polymer is prepared according to the following process: 282 g (15 mmol) of polypropylene glycol 18000 (hydroxyl value = 6.0) was dried in a 500 ml three-neck flask at 80-90°C under vacuum. Under a nitrogen atmosphere at 80°C, 0.1 g of dibutyltin laurate was added, and 7.2 g (32 mmol) 3-isocyanatopropyltrimethoxysilane (%NCO = 18.4) was then added to it. After stirring for one hour at 80°C, the resulting polymer was cooled. After adding 3 g light stabilizer (Tinuvin 770 DF) and 6 g Geniosil XL 10 to the reactor while stirring and homogenizing for 10-30 minutes at 80°C, the resulting polymer was stored in a moisture-proof glass vessel under a nitrogen atmosphere before being processed further into a curable composition.

Tensile lap-shear strength (LSS) was measured according to ISO 4587.

Mechanical data were measured according to DIN 53504.

Removability was measured according to the following procedure: For testing the removability, "sandwiches" with different primary and secondary substrates were prepared. The following combinations were used: 1) Wood (100mm x 100mm x 5mm) as primary substrate and aluminum (80mm x 20.5mm x 1mm) as secondary substrate, 2) Aluminum (100mm x 100mm x 1mm) as primary substrate and wood (80mm x 20.5mm x 4mm) as secondary substrate and 3) ceramic tile (100mm x 100mm x 7mm) as primary substrate and aluminum (100mm x 100mm x 1mm) as secondary substrate. Furthermore, ceramic tile (100mm x 100mm x 7mm) and wood (100mm x 100mm x 5mm) as primary substrates and a metal hook (adherend ~13.9 cm², weight ~55g) as secondary substrate were used as test specimen. The paste was applied restiform or punctiform (the latter when the hook was used as secondary substrate) onto the primary substrate. The secondary substrate was pressed onto the paste until the thickness of the paste between both substrates reached 2mm. The prepared specimens were stored at room temperature for 2 weeks or speed-aged at 40°C/80% r.h. for 2-3 days. After storage, a screwdriver was used for levering up the secondary substrate from the paste and/or the primary substrate. Depending on the substrates, the cured-through paste can be peeled-off from the primary or secondary substrate by hand or by using a ceramic scraper.

The removability was evaluated according to the following scale:
+ + very good (easily removable)
+ good
+- adequate
   - poor
-- very poor (virtually impossible to remove)

**Table 3: Analysis Lap Shear Strength (LSS), mechanical data, and removability**

| | **E1** | **C3** | **C1** | **C2** |
|---|---|---|---|---|
| **LSS [N / mm²]** | | | | |
| Wood / wood | 1.73 | 2.53 | n/a | n/a |
| Wood / Alu | 1.91 | 1.57 | n/a | n/a |
| Wood / PVC | 1.90 | 1.25 | n/a | n/a |
| Alu / Alu | 1.89 | 1.82 | n/a | n/a |

| **Mechanical Data** | | | | |
|---|---|---|---|---|
| Tensile Strength [N / mm²] | 2.75 | 1.63 | n/a | n/a |
| Tensile Strength, E- modulus [N / mm²] | 1.60 | 1.22 | n/a | n/a |
| Elongation at break [%] | 181.68 | 153.87 | n/a | n/a |

| **Removability** | | | | |
|---|---|---|---|---|
| Ceramic tile / Alu | + | -- | +- | - |
| Wood / Alu | ++ | - | - | -- |
| Alu / Wood | ++ | - | -- | -- |
| Ceramic tile / Hook | + | -- | n/a | -- |

## Claims

1. A curable composition comprising
(A) at least one (meth)acrylate ester polymer containing at least one reactive silyl group of the general formula (I)
-Si(R^{a})ₖ(R^{b})₃₋ₖ (I),
wherein
each R^{a} is, independently of one another, selected from hydrocarbon residues containing 1 to 20 carbon atoms;
each R^{b} is, independently of one another, selected from a hydroxyl group or hydrolysable groups; and,
k is 0, 1, or 2;
(B) at least one tertiary aminosilane;
(C) at least one fumed silica; and,
(D) at least one curing catalyst.

2. The curable composition according to claim 1, wherein the composition further comprises at least one polymer (E) containing at least one reactive silyl group of the general formula (II)
-Xₒ-R-Si(R^{c})ₘ(R^{d})₃₋ₘ (II),
wherein
the polymer backbone is selected from polyethers, polyesters, polyurethanes, poly-α-olefins, or copolymers of at least two of said polymers;
X is a divalent linking group containing at least one heteroatom;
R is selected from divalent hydrocarbon residues having 1 to 12 carbon atoms;
each R^{c} is, independently of one another, selected from hydrocarbon residues containing 1 to 20 carbon atoms and each R^{d} is, independently of one another, selected from a hydroxyl group or hydrolysable groups, wherein R^{c} and R^{d} are substituents directly bound with the Si atom or the two of the substituents R^{a} and R^{b} form a ring together with the Si atom to which they are bound;
m is 0, 1, or 2; and,
o is 0 or 1.

3. The curable composition according to claim 1 or 2, wherein the (meth)acrylate ester polymer (A) has at least two reactive silyl groups of the general formula (I), preferably at least two terminal silyl groups of the general formula (I).

4. The curable composition according to any one of claims 1 to 3, wherein the (meth)acrylate ester polymer (A) has an alkyl acrylate ester monomer unit and/or alkyl methacrylate ester monomer unit with a C₁₋₂₀ alkyl group.

5. The curable composition according to any one of clams 1 to 4,
wherein
k is 0 or 1; and/or
each R^{a} is, independently of one another, selected from C₁ to C₈ alkyl groups, preferably a methyl or an ethyl; and/or
each R^{b} is, independently of one another, selected from a hydroxyl group or hydrolysable groups selected from the group consisting of a hydrogen atom, a halogen atom, alkoxy groups, acyloxy groups, ketoximate groups, amino groups, amide groups, acid amide groups, aminooxy groups, mercapto groups, and alkenyloxy groups, preferably selected from alkoxy or acyloxy groups, more preferably selected from alkoxy groups.

6. The curable composition according to any one of claims 1 to 5, wherein -Si(R^{a})ₖ(R^{b})₃₋ₖ is selected from alkyldialkoxysilyl or trialkoxysilyl groups, preferably selected from a methyldimethoxysilyl, ethyldiethoxysilyl, trimethoxysilyl, triethoxysilyl, triisopropoxysilyl, methoxydiethoxysilyl, or ethoxydimethoxysilyl group, more preferably selected from a trimethoxysilyl or triethoxysilyl group, most preferably is a trimethoxysilyl group.

7. The curable composition according to any one of claims 1 to 6, wherein the (meth)acrylate ester polymer (A) is prepared from a mixture of (meth)acrylate monomers comprising i) at least one first (meth)acrylate monomer having a structure of CH₂=CR¹COOR², where R¹ is H or CH₃; and R² is a C₄₋₂₄, preferably C₄₋₉, linear, branched or cyclic alkyl chain, preferably n- or iso-butyl (meth)acrylate or 2-ethylhexyl (meth)acrylate, or a combination thereof; and ii) at least one second (meth)acrylate monomer having a structure of CH₂=CR¹COOR³, where R¹ is H or CH₃; R³ is C₁₋₂ alkyl chain, preferably methyl (meth)acrylate, or a combination thereof.

8. The curable composition according to any one of claims 1 to 7, wherein the tertiary aminosilane (B) is selected from the group consisting of 3-piperazinylpropylmethyldimethoxysilane, 3-(N,N-dimethylaminopropyl)amino-propylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyl-triethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, and mixtures thereof, preferably selected from the group consisting of 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane and 4-amino-3,3-dimetylbuthyltriethoxysilane.

9. The curable composition according to any one of claims 1 to 8, wherein the fumed silica (C) comprises a mixture of at least one hydrophilic fumed silica and at least one hydrophobic fumed silica.

10. The curable composition according to any one of claims 2 to 9, wherein the weight ratio between the (meth)acrylate ester polymer (A) and the polymer (E) is in the range of 20/80 to 90/10, preferably 25/75 to 60/40.

11. The curable composition according to any one of claims 2 to 10,
wherein
the polymer backbone of the polymer (E) is selected from polyethers or polyurethanes; and/or
the divalent linking group X is selected from the group consisting of -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, -NR"-, and -R"'-O-, wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms; and/or
R is a divalent hydrocarbon residue having 1 to 6 carbon atoms, preferably a methylene, ethylene or n-propylene, more preferably a methylene or n-propylene; and/or
each R^{c} is, independently of one another, selected from C₁ to C₁₀ alkyl groups, C₆ to C₁₀ aryl groups, or C₇ to C₁₀ aralkyl groups, preferably selected from C₁ to C₈ alkyl groups, more preferably is a methyl or an ethyl group; and/or
each R^{d} is, independently of one another, selected from a hydroxyl group or hydrolysable groups selected from the group consisting of a hydrogen atom, a halogen atom, alkoxy groups, acyloxy groups, ketoximate groups, amino groups, amide groups, acid amide groups, aminooxy groups, mercapto groups, and alkenyloxy groups, preferably alkoxy or acyloxy groups, more preferably C₁ to C₈ alkoxy or C₁ to C₈ acyloxy groups; and/or
m is 0 or 1; and/or
o is 0.

12. The curable composition according to any one of claims 2 to 11, wherein -Si(R^{c})ₘ(R^{d})₃₋ₘ is selected from alkyldialkoxysilyl or trialkoxysilyl groups, preferably selected from a methyldimethoxysilyl, ethyldiethoxysilyl, trimethoxysilyl, or triethoxysilyl group, more preferably selected from a methyldimethoxysilyl or trimethoxysilyl group.

13. A process for preparing a removable adhesion of at least two substrates by applying the curable composition according to any one of claims 1 to 12 between the substrates.

14. Use of the curable composition according to any one of claims 1 to 12 as an adhesive, sealant, and/or coating material, preferably a removable adhesive, sealant, and/or coating material.

15. An adhesive, sealant, and/or coating material comprising the curable composition according to any one of claims 1 to 12.

## Patentansprüche

1. Härtbare Zusammensetzung, umfassend
(A) mindestens ein (Meth)acrylatesterpolymer, das mindestens eine reaktive Silylgruppe der allgemeinen Formel (I) enthält
-Si(R^{a})ₖ(R^{b})₃₋ₖ (I),
wobei
jedes R^{a} unabhängig voneinander ausgewählt ist aus Kohlenwasserstoffrückständen, die 1 bis 20 Kohlenstoffatome enthalten;
jedes R^{b} unabhängig voneinander ausgewählt ist aus einer Hydroxylgruppe oder hydrolysierbaren Gruppen; und
k 0, 1 oder 2 ist;
(B) mindestens ein tertiäres Aminosilan;
(C) mindestens eine pyrogene Kieselsäure; und
(D) mindestens einen Härtungskatalysator.

2. Härtbare Zusammensetzung nach Anspruch 1, wobei die Zusammensetzung ferner mindestens ein Polymer (E) umfasst, das mindestens eine reaktive Silylgruppe der allgemeinen Formel (II) enthält
-Xₒ-R-Si(R^{c})ₘ(R^{d})₃₋ₘ (II),
wobei
das Polymerrückgrat aus Polyethern, Polyestern, Polyurethanen, Poly-α-Olefinen oder Copolymeren von mindestens zwei der Polymere ausgewählt ist;
X eine zweiwertige Verbindungsgruppe ist, die mindestens ein Heteroatom enthält;
R aus zweiwertigen Kohlenwasserstoffrückständen ausgewählt ist, die 1 bis 12 Kohlenstoffatome aufweisen;
jedes R^{c} unabhängig voneinander ausgewählt ist aus Kohlenwasserstoffrückständen, die 1 bis 20 Kohlenstoffatome enthalten und jedes R^{d} unabhängig voneinander ausgewählt ist aus einer Hydroxylgruppe oder hydrolysierbaren Gruppen, wobei R^{c} und R^{d} Substituenten sind, die direkt an das Si-Atom gebunden sind, oder die zwei der Substituenten R^{a} und R^{b} zusammen mit dem Si-Atom, an das sie gebunden sind, einen Ring ausbilden;
m 0, 1 oder 2 ist; und
o 0 oder 1 ist.

3. Härtbare Zusammensetzung nach Anspruch 1 oder 2, wobei das (Meth)acrylatesterpolymer (A) mindestens zwei reaktive Silylgruppen der allgemeinen Formel (I), vorzugsweise mindestens zwei endständige Silylgruppen der allgemeinen Formel (I), aufweist.

4. Härtbare Zusammensetzung nach einem der Ansprüche 1 bis 3, wobei das (Meth)acrylatesterpolymer (A) eine Alkylacrylatestermonomereinheit und/oder eine Alkylmethacrylatestermonomereinheit mit einer C₁₋₂₀-Alkylgruppe aufweist.

5. Härtbare Zusammensetzung nach einem der Ansprüche 1 bis 4,
wobei
k 0 oder 1 ist; und/oder
jedes R^{a} unabhängig voneinander ausgewählt ist aus C₁ bis C₈-Alkylgruppen, vorzugsweise einem Methyl oder Ethyl; und/oder
jedes R^{b} unabhängig voneinander ausgewählt ist aus einer Hydroxylgruppe oder hydrolysierbaren Gruppen, ausgewählt aus der Gruppe bestehend aus einem Wasserstoffatom, einem Halogenatom, Alkoxygruppen, Acyloxygruppen, Ketoximatgruppen, Aminogruppen, Amidgruppen, Säureamidgruppen, Aminooxygruppen, Mercaptogruppen und Alkenyloxygruppen, vorzugsweise ausgewählt aus Alkoxy- oder Acyloxygruppen, stärker bevorzugt ausgewählt aus Alkoxygruppen.

6. Härtbare Zusammensetzung nach einem der Ansprüche 1 bis 5,
wobei -Si(R^{a})ₖ(R^{b})₃₋ₖ ausgewählt ist aus Alkyldialkoxysilyl- oder Trialkoxysilylgruppen, vorzugsweise ausgewählt aus einer Methyldimethoxysilyl-, Ethyldiethoxysilyl-, Trimethoxysilyl-, Triethoxysilyl-, Triisopropoxysilyl-, Methoxydiethoxysilyl- oder Ethoxydimethoxysilylgruppe, stärker bevorzugt ausgewählt aus einer Trimethoxysilyl- oder Triethoxysilylgruppe, am stärksten bevorzugt eine Trimethoxysilylgruppe ist.

7. Härtbare Zusammensetzung nach einem der Ansprüche 1 bis 6, wobei das (Meth)acrylatesterpolymer (A) aus einer Mischung von (Meth)acrylatmonomeren hergestellt wird, umfassend i) mindestens ein erstes (Meth)acrylatmonomer, das eine Struktur von CH₂=CR¹COOR² aufweist, wobei R¹ H oder CH₃ ist; und R² eine C₄₋₂₄, vorzugsweise eine C₄₋₉, lineare, verzweigte oder zyklische Alkylkette ist, vorzugsweise n- oder iso-Butyl(meth)acrylat oder 2-Ethylhexyl(meth)acrylat oder eine Kombination davon; und ii) mindestens ein zweites (Meth)acrylatmonomer, das eine Struktur von CH₂=CR¹COOR³ aufweist, wobei R¹ H oder CH₃ ist; R³ eine C₁₋₂-Alkylkette ist, vorzugsweise Methyl(meth)acrylat, oder eine Kombination davon.

8. Härtbare Zusammensetzung nach einem der Ansprüche 1 bis 7, wobei das tertiäre Aminosilan (B) ausgewählt ist aus der Gruppe bestehend aus 3-Piperazinylpropylmethyldimethoxysilan, 3-(N,N-dimethylaminopropyl)amino-propylmethyldimethoxysilan, tri[(3-Triethoxysilyl)propyl]amin, tri[(3-Trimethoxysilyl)propyl]amin, und den Oligomeren davon, 3-(N,N-Dimethylamino)propyltrimethoxysilan, 3-(N,N-Dimethylamino)-propyltriethoxysilan, (N,N-Dimethylamino)methyltrimethoxysilan, (N,N-Dimethylamino)methyltriethoxysilan, 3-(N,N-Diethylamino)propyltrimethoxysilan, 3-(N,N-Diethylamino)propyltriethoxysilan, (N,N-Diethylamino)methyltrimethoxysilan, (N,N-Diethylamino)methyltriethoxysilan, Bis(3-trimethoxysilyl)propylamin, Bis(3-triethoxysilyl)propylamin und Mischungen davon, vorzugsweise ausgewählt aus der Gruppe, bestehend aus 3-(N,N-Dimethylamino)propyltrimethoxysilan, 3-(N,N-Dimethylamino)propyltriethoxysilan, (N,N-Dimethylamino)methyltrimethoxysilan, (N,N-Dimethylamino)methyltriethoxysilan, 3-(N,N-Diethylamino)propyltrimethoxysilan, 3-(N,N-Diethylamino)propyltriethoxysilan, (N,N-Diethylamino)methyltrimethoxysilan, (N,N-Diethylamino)methyltriethoxysilan, 4-Amino-3,3-dimethylbutyltrimethoxysilan und 4-Amino-3,3-dimetylbuthyltriethoxysilan.

9. Härtbare Zusammensetzung nach einem der Ansprüche 1 bis 8, wobei die pyrogene Kieselsäure (C) eine Mischung aus mindestens einer hydrophilen pyrogenen Kieselsäure und mindestens einer hydrophoben pyrogenen Kieselsäure umfasst.

10. Härtbare Zusammensetzung nach einem der Ansprüche 2 bis 9, wobei das Gewichtsverhältnis zwischen dem (Meth)acrylatesterpolymer (A) und dem Polymer (E) in dem Bereich von 20 / 80 bis 90 / 10, vorzugsweise 25 / 75 bis 60 / 40 liegt.

11. Härtbare Zusammensetzung nach einem der Ansprüche 2 bis 10,
wobei
das Polymerrückgrat des Polymers (E) ausgewählt ist aus Polyethern oder Polyurethanen; und/oder
die zweiwertige Verbindungsgruppe X ausgewählt ist aus der Gruppe bestehend aus -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, -NR"-, and -R"'-O-, wobei R" ein Wasserstoff oder ein linearer oder verzweigter und substituierter oder unsubstituierter Kohlenwasserstoffrückstand ist, der 1 bis 12 Kohlenstoffatome aufweist; und R‴ aus ein linearer oder verzweigter und substituierter oder unsubstituierter Kohlenwasserstoffrückstand ist, der 1 bis 12 Kohlenstoffatome aufweist; und/oder
R ein zweiwertiger Kohlenwasserstoffrückstand ist, der 1 bis 6 Kohlenstoffatome aufweist, vorzugsweise ein Methylen, Ethylen oder n-Propylen, stärker bevorzugt ein Methylen oder n-Propylen; und/oder
jedes R^{c} unabhängig voneinander ausgewählt ist aus C₁ bis C₁₀-Alkylgruppen, C₆ bis C₁₀-Arylgruppen oder C₇ bis C₁₀-Aralkylgruppen, vorzugsweise ausgewählt aus C₁ bis C₈-Alkylgruppen, stärker bevorzugt eine Methyl- oder eine Ethylgruppe ist; und/oder
jedes R^{d} unabhängig voneinander ausgewählt ist aus einer Hydroxylgruppe oder hydrolysierbaren Gruppen ausgewählt aus der Gruppe bestehend aus einem Wasserstoffatom, einem Halogenatom, Alkoxygruppen, Acyloxygruppen, Ketoximatgruppen, Aminogruppen, Amidgruppen, Säureamidgruppen, Aminooxygruppen, Mercaptogruppen und Alkenyloxygruppen, vorzugsweise Alkoxy- oder Acyloxygruppen, stärker bevorzugt C₁ bis C₈-Alkoxy- oder C₁ bis C₈-Acyloxygruppen; und/oder
m 0 oder 1 ist; und/oder
o 0 ist.

12. Härtbare Zusammensetzung nach einem der Ansprüche 2 bis 11,
wobei -Si(R^{c})ₘ(R^{d})₃₋ₘ ausgewählt ist aus Alkyldialkoxysilyl- oder Trialkoxysilylgruppen, vorzugsweise ausgewählt aus einer Methyldimethoxysilyl-, Ethyldiethoxysilyl-, Trimethoxysilyl- oder Triethoxysilylgruppe, stärker bevorzugt ausgewählt aus einer Methyldimethoxysilyl- oder Trimethoxysilylgruppe.

13. Verfahren zum Herstellen einer entfernbaren Verklebung von mindestens zwei Substraten durch ein Auftragen der härtbaren Zusammensetzung nach einem der Ansprüche 1 bis 12 zwischen die Substrate.

14. Verwendung der härtbaren Zusammensetzung nach einem der Ansprüche 1 bis 12 als einen Klebstoff, Dichtungsmaterial und/oder Beschichtungsmaterial, vorzugsweise einen entfernbaren Klebstoff, Dichtungsmaterial und/oder Beschichtungsmaterial.

15. Klebstoff, Dichtungsmaterial und/oder Beschichtungsmaterial, umfassend die härtbare Zusammensetzung nach einem der Ansprüche 1 bis 12.

## Revendications

1. Composition durcissable comprenant
(A) au moins un polymère d'ester de (méth)acrylate contenant au moins un groupe silyle réactif de la formule générale (I)
-Si(R^{a})ₖ(R^{b})₃₋ₖ (1),
dans laquelle
chaque R^{a} est, indépendamment les uns des autres, choisi parmi des résidus hydrocarbonés contenant de 1 à 20 atomes de carbone ;
chaque R^{b} est, indépendamment les uns des autres, choisi parmi un groupe hydroxyle ou des groupes hydrolysables ; et,
k vaut 0, 1, ou 2 ;
(B) au moins un aminosilane tertiaire ;
(C) au moins une silice sublimée ; et,
(D) au moins un catalyseur de durcissement.

2. Composition durcissable selon la revendication 1, dans laquelle la composition comprend en outre au moins un polymère (E) contenant au moins un groupe silyle réactif de la formule générale (II)
-Xₒ-R-Si(R^{c})ₘ(R^{d})₃₋ₘ (II),
dans laquelle
le squelette polymère est choisi parmi des polyéthers, polyesters, polyuréthanes, poly-α-oléfines, ou des copolymères d'au moins deux desdits polymères ;
X est un groupe de liaison divalent contenant au moins un hétéroatome ;
R est choisi parmi des résidus hydrocarbonés divalents ayant de 1 à 12 atomes de carbone ;
chaque R^{c} est, indépendamment les uns des autres, choisi parmi des résidus hydrocarbonés contenant de 1 à 20 atomes de carbone et chaque R^{d} est, indépendamment les uns des autres, choisi parmi un groupe hydroxyle ou des groupes hydrolysables, dans laquelle R^{c} et R^{d} sont des substituants directement liés à l'atome de Si ou les deux substituants R^{a} et R^{b} forment un cycle conjointement avec l'atome de Si auquel ils sont liés ;
m vaut 0, 1, ou 2 ; et,
o vaut 0 ou 1.

3. Composition durcissable selon la revendication 1 ou 2, dans laquelle le polymère d'ester de (méth)acrylate (A) a au moins deux groupes silyle réactifs de la formule générale (I), de préférence au moins deux groupes silyle terminaux de la formule générale (I).

4. Composition durcissable selon l'une quelconque des revendications 1 à 3, dans laquelle le polymère d'ester de (méth)acrylate (A) a un motif monomère d'ester d'acrylate d'alkyle et/ou un motif monomère d'ester de méthacrylate d'alkyle avec un groupe alkyle en C₁₋₂₀.

5. Composition durcissable selon l'une quelconque des revendications 1 à 4,
dans laquelle
k vaut 0 ou 1 ; et/ou
chaque R^{a} est, indépendamment les uns des autres, choisi parmi des groupes alkyle en C₁ à C₈, de préférence un méthyle ou un éthyle ; et/ou
chaque R^{b} est, indépendamment les uns des autres, choisi parmi un groupe hydroxyle ou des groupes hydrolysables choisis dans le groupe constitué d'un atome d'hydrogène, d'un atome d'halogène, de groupes alcoxy, de groupes acyloxy, de groupes cétoximate, de groupes amino, de groupes amide, de groupes amide acide, de groupes aminooxy, de groupes mercapto, et de groupes alcényloxy, de préférence choisis parmi des groupes alcoxy ou acyloxy, plus préférablement choisis parmi des groupes alcoxy.

6. Composition durcissable selon l'une quelconque des revendications 1 à 5, dans laquelle -Si(R^{a})ₖ(R^{b})₃₋ₖ est choisi parmi des groupes alkyldialcoxysilyle ou trialcoxysilyle, de préférence choisi parmi un groupe méthyldiméthoxysilyle, éthyldiéthoxysilyle, triméthoxysilyle, triéthoxysilyle, triisopropoxysilyle, méthoxydiéthoxysilyle, ou éthoxydiméthoxysilyle, plus préférablement un groupe triméthoxysilyle ou triéthoxysilyle, le plus préférablement un groupe triméthoxysilyle.

7. Composition durcissable selon l'une quelconque des revendications 1 à 6, dans laquelle le polymère d'ester de (méth)acrylate (A) est préparé à partir d'un mélange de monomères de (méth)acrylate comprenant i) au moins un premier monomère de (méth)acrylate ayant une structure CH₂=CR¹COOR², où R¹ est H ou CH₃; et R² est une chaîne alkyle linéaire, ramifiée ou cyclique, en C₄₋₂₄, de préférence en C₄₋₉, de préférence le (méth)acrylate de n- ou d'iso-butyle ou le (méth)acrylate de 2-éthylhexyle, ou une combinaison de ceux-ci ; et ii) au moins un second monomère de (méth)acrylate ayant une structure CH₂=CR¹COOR³, où R¹ est H ou CH₃ ; R³ est une chaîne alkyle en C₁₋₂, de préférence le (méth)acrylate de méthyle, ou une combinaison de ceux-ci.

8. Composition durcissable selon l'une quelconque des revendications 1 à 7, dans laquelle l'aminosilane tertiaire (B) est choisi dans le groupe constitué de 3-pipérazinylpropylméthyldiméthoxysilane, 3-(N,N-diméthylaminopropyl)amino-propylméthyldiméthoxysilane, tri[(3-triéthoxysilyl)propyl]amine, tri[(3-triméthoxysilyl)propyl]amine, et les oligomères de ceux-ci, 3-(N,N-diméthylamino)propyltriméthoxysilane, 3-(N,N-diméthylamino)-propyltriéthoxysilane, (N,N-diméthylamino)méthyltriméthoxysilane, (N,N-diméthylamino)méthyl-triéthoxysilane, 3-(N,N-diéthylamino)propyltriméthoxysilane, 3-(N,N-diéthylamino)propyltriéthoxysilane, (N,N-diéthylamino)méthyltriméthoxysilane, (N,N-diéthylamino)méthyltriéthoxysilane, bis(3-triméthoxysilyl)propylamine, bis(3-triéthoxysilyl)propylamine, et mélanges de ceux-ci, de préférence choisis dans le groupe constitué de 3-(N,N-diméthylamino)propyltriméthoxysilane, 3-(N,N-diméthylamino)propyltriéthoxysilane, (N,N-diméthylamino)méthyltriméthoxysilane, (N,N-diméthylamino)méthyltriéthoxysilane, 3-(N,N-diéthylamino)propyltriméthoxysilane, 3-(N,N-diéthylamino)propyltriéthoxysilane, (N,N-diéthylamino)méthyltriméthoxysilane, (N,N-diéthylamino)méthyltriéthoxysilane, 4-amino-3,3-diméthylbutyltriméthoxysilane et 4-amino-3,3-diméthylbuthyltriéthoxysilane.

9. Composition durcissable selon l'une quelconque des revendications 1 à 8, dans laquelle la silice sublimée (C) comprend un mélange d'au moins une silice sublimée hydrophile et d'au moins une silice sublimée hydrophobe.

10. Composition durcissable selon l'une quelconque des revendications 2 à 9, dans laquelle le rapport en poids entre le polymère d'ester de (méth)acrylate (A) et le polymère (E) est compris dans la plage de 20/80 à 90/10, de préférence de 25/75 à 60/40.

11. Composition durcissable selon l'une quelconque des revendications 2 à 10,
dans laquelle
le squelette polymère du polymère (E) est choisi parmi des polyéthers ou des polyuréthanes ; et/ou
le groupe de liaison divalent X est choisi dans le groupe constitué de -OC(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S-, - C(=O)-S-, -S-C(=O)-, -S-C(=O)-S-, -C(=O)-, -S-, -O-, -NR"-, et -R‴-O-, dans laquelle R" est un hydrogène ou un résidu hydrocarboné linéaire ou ramifié et substitué ou non substitué ayant de 1 à 12 atomes de carbone ; et R‴ est un résidu hydrocarboné linéaire ou ramifié et substitué ou non substitué ayant de 1 à 12 atomes de carbone ; et/ou
R est un résidu hydrocarboné divalent ayant de 1 à 6 atomes de carbone, de préférence un méthylène, éthylène ou n-propylène, plus préférablement un méthylène ou n-propylène ; et/ou
chaque R^{c} est, indépendamment les uns des autres, choisi parmi des groupes alkyle en C₁ à C₁₀, des groupes aryle en C₆ à C₁₀, ou des groupes aralkyle en C₇ à C₁₀, de préférence choisi parmi des groupes alkyle en C₁ à C₈, plus préférablement est un groupe méthyle ou éthyle ; et/ou
chaque R^{d} est, indépendamment les uns des autres, choisi parmi un groupe hydroxyle ou des groupes hydrolysables choisis dans le groupe constitué d'un atome d'hydrogène, d'un atome d'halogène, de groupes alcoxy, de groupes acyloxy, de groupes cétoximate, de groupes amino, de groupes amide, de groupes amide acide, de groupes aminooxy, de groupes mercapto, et de groupes alcényloxy, de préférence de groupes alcoxy ou acyloxy, plus préférablement de groupes alcoxy en C₁ à C₈ ou de groupes acyloxy en C₁ à C₈ ; et/ou
m vaut 0 ou 1 ; et/ou
o vaut 0.

12. Composition durcissable selon l'une quelconque des revendications 2 à 11, dans laquelle -Si(R^{c})ₘ(R^{d})₃₋ₘ est choisi parmi des groupes alkyldialcoxysilyle ou trialcoxysilyle, de préférence choisi parmi un groupe méthyldiméthoxysilyle, éthyldiéthoxysilyle, triméthoxysilyle, ou triéthoxysilyle, plus préférablement parmi un groupe méthyldiméthoxysilyle ou triméthoxysilyle.

13. Procédé de préparation d'une adhésion amovible d'au moins deux substrats par application de la composition durcissable selon l'une quelconque des revendications 1 à 12 entre les substrats.

14. Utilisation de la composition durcissable selon l'une quelconque des revendications 1 à 12 en tant qu'un adhésif, produit d'étanchéité, et/ou matériau de revêtement, de préférence un adhésif, produit d'étanchéité, et/ou matériau de revêtement amovible.

15. Adhésif, produit d'étanchéité, et/ou matériau de revêtement comprenant la composition durcissable selon l'une quelconque des revendications 1 à 12.
